Europäisches Patentamt

European Patent Office

Office européen des brevets

(11) Publication number: **0 457 062 A1**

# EUROPEAN PATENT APPLICATION

(21) Application number: 91106484.8

(22) Date of filing: 23.04.91

(51) Int. Cl.⁵: **A23L 1/212**

(30) Priority: 14.05.90 IT 2028790

(43) Date of publication of application:
21.11.91 Bulletin 91/47

(84) Designated Contracting States:
AT BE CH DE DK ES FR GB GR IT LI LU NL SE

(71) Applicant: ROSSI & CATELLI S.P.A.
Via Traversetolo, 2/A
I-43100 Parma(IT)

(72) Inventor: Catelli, Camillo
Via Togliatti, 8
I-43100 Parma(IT)

(74) Representative: Vannini, Torquato et al
JACOBACCI-CASETTA & PERANI S.p.A. 7 Via
Visconti di Modrone
I-20122 Milan(IT)

(54) A method of making a mash of fresh fruits or vegetables on a commercial scale.

(57) To make an edible mash of fresh fruits or vegetables exhibiting a marked reduction in the content of toxic contaminants from the cathegories of plant curatives and anticryptogamics as employed in agriculture, the pulp of fruits (or vegetables) is cold separated from the rind, containing most of such toxic contaminants, prior to the heat treatment for enzymatic deactivation.

Rank Xerox (UK) Business Services

EP 0 457 062 A1

This invention relates to a method of making on a commercial scale an edible mash of fresh fruit such as, in particular, apples, peaches, pears, apricots, cherries, plums, but also of vegetables, e.g. tomatoes and dwarf marrows.

Merely in the interest of a simpler specification of this invention, reference will be made herein below to fresh fruit alone.

As is known, the currently most widely used technology for making an edible mash of the kind under consideration here, consists of mincing and/or stoning a selected fruit species to obtain a mixture made up of the pulp, rind, stem, seeds, etc., which is then subjected to an enzymatic deactivation process carried out under heated conditions and followed by a step of separation of the pulp from the remaining components in the mixture, usually to becarried out on sieving/refining equipment.

Enzymatic deactivation, as applied under heated conditions (80° to 110° C), is bound to promote transference to the mash of both toxic contaminants, as present on the fruit rind, and the rind own pigments.

It has been found, in fact, that in fresh fruit mash prepared by prior methods, there may often appear carbamates, dithiocarbamates ethylene-bis-dithiocarbamates, phosphoric esters, pyrethrines, aromatic and thioaromatic compounds of the kind employed to promote proper growth and ripening of fruits; organic azo- and/or sulphothed-compounds (e.g. thiobendazoles, diphenylamines, ethoxyquines, etc.) as employed to improve the preservability of fruits.

The presence of such compounds, albeit in minute amounts, is the first and foremost drawback of conventional methods of making fresh fruit mash.

Another drawback, which appears especially where apple mash is the end product of interest, resides in that so-called red-rind apples cannot be used. In fact, consequently to the heat treatment of enzymatic deactivation applied to the mixture comprising pulp, rind, seeds, stems, etc., the apple rind would transfer pigments to the pulp which alter its color to an unacceptable extent.

The underlying technical problem of this invention is to provide a method of making on a commercial scale an edible mash from fresh fruits and vegetables, which can obviate the aforementioned drawbacks with which the prior art is beset.

This problem is solved according to the invention by a method whereby the fruit may be stoned and ruptured mechanically to yield a mixture comprising pulp and rind, which method is characterised in that said mixture is subjected to a sieving step carried out under cold conditions to separate from the pulp a residue comprising the rind, said pulp being then delivered to a conventional step of enzymatic deactivation under heated conditions.

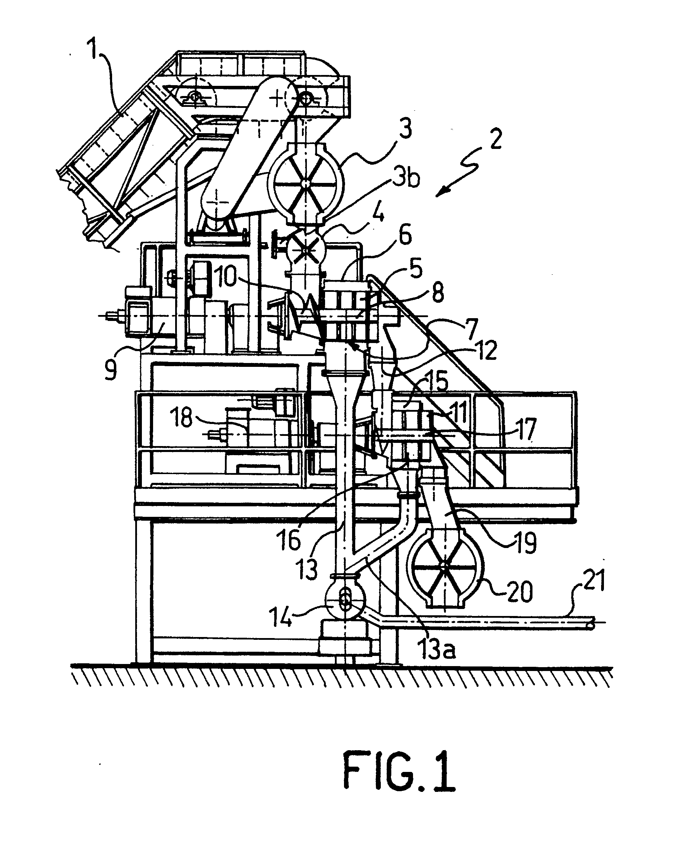

The features and advantages of the invention will be more clearly understood from the following detailed description of an exemplary embodiment of the method according to the invention, to be taken in conjunction with the accompanying drawing whose single figure shows schematically, in elevation view, an apparatus for implementing this method for illustrative purposes only.

With reference to the drawing figure, an apparatus for implementing the method of this invention comprises a bucket elevator 1 operative to feed vegetables or fruits to a rupturing unit 2 on a continuous basis.

This unit 2 comprises a spider valve 3 and a coarse rupturing device 4 which is supplied with vegetables or fruits through said spider valve 3.

Alternatively, the rupturing device 4 could be supplied from a suitable pumping unit (not shown because conventional) connected thereto through a fitting 3b.

The device 4 is connected to a refiner 5, the cylindrical case 6 of which has a drum sieve 7 secured therein, said drum sieve having a vane rotor 8 driven by a conventional motive means 9. Externally of the sieve 7, there is keyed or otherwise secured to the rotor 8 a volute 10, which locates beneath the rupturing device 4 from which it is fed.

A second refiner 11 is connected to the first-mentioned refiner 5 by a conduit 12. Secured within the cylindrical case 15 of this refiner 11 is a drum sieve 16, wherein a vane rotor 17 is active which is driven by a respective motive means 18.

The spider valve 3, rupturing device 4, and refiners 5 and 11 are in mutual fluid communication and allowed to operate under a vacuum condition by the very provision of the spider valves 3 and 20.

The refiners 5 and 11 are connected, via respective conduits 13 and 13a, to the suction side of a pump 14 whose delivery side is in fluid communication with a duct 21 for conveying the product to an enzymatic deactivation apparatus, known per se and not shown in the drawing.

Fresh fruits (or vegetables) are loaded onto the bucket elevator 1, which is to feed the rupturing unit 2 continuously. Through the spider valve 3, the fruits are introduced into the device 4 for coarsely rupturing the fruits. A continuous outflow from the device 4, comprising basically a mixture of pulp, rind, stones, seeds, etc., is gravity fed to the refiner 5 at the volute 10 thereof, whence it is then taken to the drum sieve 7. Due to the action by the vanes of the vane rotor 8 cooperating with the drum sieve 10, the fruit pulp is separated under cold conditions (preferably at room temperature) from the rind, seeds and/or stones or any other undesired matter, which are then discharged axially from the refiner 5 and taken to the second refiner 11 over the conduit 12; the presently rind-free cold pulp being urged by the vane rotor 8 through the sieve 7, is drawn up by the pump 14 and delivered to the enzymatic deactivation step under heated conditions through the duct 21.

Also taken to the pump 14 is that pulp portion which the refiner 11 has succeeded to separate from the rind and other residual matter, which rind and residue is then definitely ejected from the apparatus via the spider valve 20.

The enzymatic deactivation step under heated conditions applied to the pulp, and its related equipment, are conventional and not illustrated. An example of enzymatic deactivation and of an apparatus for implementing it is fully disclosed in US Patent No. 4.543.879, incorporated hereto by reference.

By virtue of the separation of the rind from the pulp of the fruits (or vegetables) of choice provided by the method of this invention, the enzymatic deactivation under heated conditions can be applied to a pulp which is thoroughly rind-free; thus, substantially removed is the risk of contaminating the mash with toxic compounds (plant curatives, anticryptogamics) to be normally found on the rind. This major advantage is supplemented by that, with the method of this invention, red-rind apples can also be processed to yield a light-colored mash. In fact, during the heat treatment for enzymatic deactivation, the likelihood is also eliminated of pigments becoming transferred to the mash from the rind portion, since the rind would be thoroughly removed.

In some particular circumstances, usually tied to the nature of the start product being processed, it has been found advantageous to perform the product rupture and subsequent separation of the pulp from the rind in a vacuumed and/or substantially oxygen-free medium.

**Claims**

1. A method of making on a commercial scale a mash of fresh fruits or vegetables, wherein the fruits or vegetables may be stoned and ruptured mechanically to yield a mixture comprising pulp and rind, which method is characterised in that said mixture is subjected to a sieving step carried out under cold conditions to separate from the pulp a residue comprising the rind, said pulp being then delivered to a conventional step of enzymatic deactivation under heated conditions.

2. A method according to Claim 1, characterised in that the cold sieving step for the mixture comprising pulp and rind is carried out in a substantially oxygen-free confined medium.

3. A method according to Claim 1, characterised in that the steps of mechanically rupturing the fruits or vegetables and subsequently cold sieving the mixture from said mechanical rupturing are carried out in a substantially oxygen-free confined medium.

4. A method according to Claim 1, characterised in that said sieving step is carried out on the mixture comprising pulp and rind at room temperature.

5. A method according to Claim 4, characterised in that said mixture sieving step is carried out under a vacuum.

6. A method according to Claims 1 to 3, characterised in that the steps of mechanically rupturing and cold sieving the mixture from said rupturing are carried out under a vacuum.

FIG.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | CA-A-9 208 67 (M.L.COLTART)<br>* claims 1, 7, 18, 23 * * page 1, line 27 - page 2, line 7 @ page 3, line 30 - page 5, line 7 @ figure 2 *<br>– – – | 1,4,2,3,5, 6 | A 23 L 1/212 |
| Y | GB-A-2 173 993 (ROSSI & CATELLI)<br>* claims 1, 5, 10 * * page 1, line 1 - page 2, line 29 *<br>– – – | 2,3,5,6 | |
| A | GB-A-2 183 445 (ROSSI & CATELLI)<br>* claims 1-4 * * page 1, line 24 - page 95 * * figures 1, 2 *<br>– – – – – | 1-6 | |

| | | TECHNICAL FIELDS SEARCHED (Int. Cl.5) |
|---|---|---|
| | | A 23 L |

The present search report has been drawn up for all claims

| Place of search | Date of completion of search | Examiner |
|---|---|---|
| The Hague | 07 August 91 | VUILLAMY V.M.L. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document